# EUROPEAN PATENT SPECIFICATION

(11) **EP 4 297 170 B1**
(45) Date of publication and mention of the grant of the patent: **08.04.2026**
(21) Application number: 22842362.0
(22) Date of filing: 06.07.2022
(51) Int. Cl.: H01M 50/516, H01M 50/213, G01N 21/88, H01M 50/107, H01M 50/20, H01M 10/04, H01M 10/0525

(54) **BATTERY MODULE ASSEMBLY APPARATUS WITH IMPROVED PRODUCTIVITY AND ASSEMBLY METHOD USING THE SAME**
BATTERIEMODULANORDNUNGSVORRICHTUNG MIT ERHÖHTER PRODUKTIVITÄT UND ANORDNUNGSVERFAHREN DAMIT
APPAREIL D'ASSEMBLAGE DE MODULE DE BATTERIE AYANT UNE PRODUCTIVITÉ AMÉLIORÉE ET PROCÉDÉ D'ASSEMBLAGE L'UTILISANT

(30) Priority: 15.07.2021 KR 20210092662
(43) Date of publication of application: 27.12.2023
(73) Proprietor: LG Energy Solution, Ltd., Seoul 07335 (KR)
(72) Inventor: JEUNG, Seok Won, Daejeon 34122 (KR); OH, Hyun Min, Daejeon 34122 (KR); PARK, Geon Tae, Daejeon 34122 (KR); KANG, Choon Kwon, Daejeon 34122 (KR)
(74) Representative: Plasseraud IP
(86) International application number: PCT/KR2022/009739
(87) International publication number: WO 2023/287100

(56) References cited:
- EP-A1- 4 087 049
- CN-A- 110 328 461
- KR-A- 20170 071 077
- KR-B1- 101 249 510
- KR-B1- 101 664 944
- KR-B1- 101 900 403
- US-A1- 2020 147 714

## Description

### [Technical Field]

This application claims the benefit of priority to Korean Patent Application No. 2021-0092662 filed on July 15, 2021.

The present invention relates to a battery module assembly apparatus with improved productivity and an assembly method using the same. More particularly, the present invention relates to a battery module assembly apparatus including two or more bonding units and capable of individually supplying a battery module to each bonding unit to electrically connect a battery cell and a busbar to each other and an assembly method using the same.

### [Background Art]

Secondary batteries are generally used in an electric vehicle (EV) or a hybrid electric vehicle (HEV), which is driven by an electric driving source, as well as portable devices. Secondary batteries have attracted attention as a new energy source capable of enhancing environmental friendliness and energy efficiency since the secondary batteries generate no byproducts as the result of using energy in addition to the primary advantage of remarkably reducing the use of fossil fuels.

There are a lithium ion battery, a lithium polymer battery, a nickel-cadmium battery, a nickel-hydride battery, and a nickel-zinc battery as secondary batteries. The operating voltage of a unit secondary battery cell, i.e., a unit battery cell, is about 2.5 V to 4.5 V. When output voltage higher than the above operating voltage is required, therefore, a plurality of battery cells may be connected to each other in series to constitute a battery module. In addition, a plurality of battery modules may be connected to each other in series or in parallel to constitute a battery pack depending on required charge and discharge capacities.

In order to satisfy required output voltage, a plurality of cylindrical battery cells is received in a battery module, and the battery cells are electrically connected to each other via a busbar. For a cylindrical battery cell, however, a positive electrode and a negative electrode are located very close to each other and the area of a part having each polarity is small, whereby it is not easy to connect the cylindrical battery cell to the busbar.

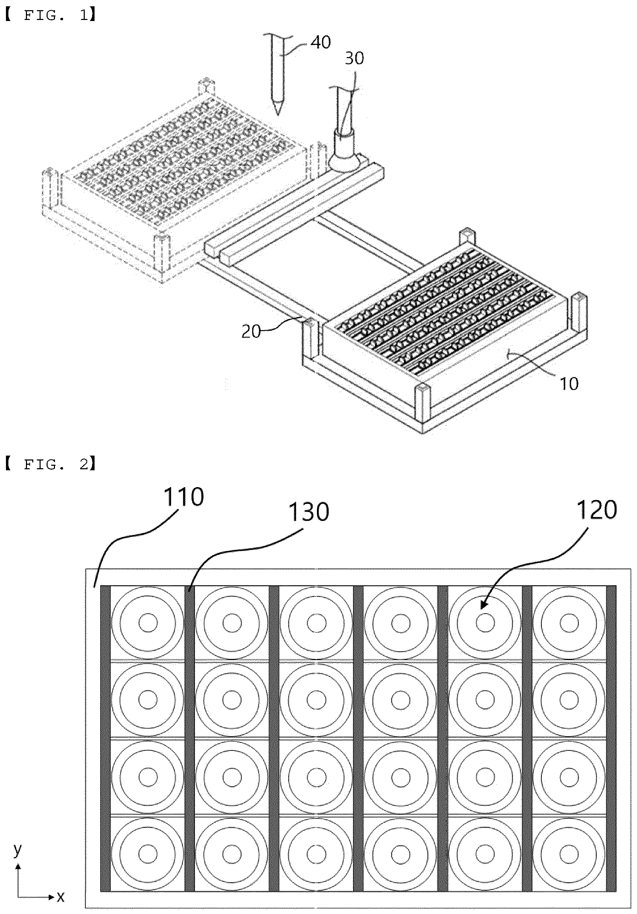

In connection therewith, FIG. 1 is a schematic view showing a conventional battery cell bonding apparatus. Referring to FIG. 1, a battery module assembly apparatus includes a supply unit configured to supply a battery module 10 to the apparatus, a transfer unit 20 configured to move the supplied battery module to a work position, a vision unit 30 including a vision type camera configured to scan the battery module transferred, and a welding unit 40 configured to perform bonding work with respect to the battery module. The battery module transferred by the transfer unit is scanned through the vision type camera to set coordinates thereof, and the welding unit is moved to the work position based on this information in order to perform bonding work. In the above conventional art, one welding unit and one vision type camera are basically provided, and the welding unit performs bonding work. The battery module assembly apparatus according to FIG. 1 has disadvantages in that 1) in the initial stage, coordinates are set using only one vision unit for scanning, whereby a function of correcting errors at the time of actual welding is not provided, 2) work is performed in a line, whereby productivity is low, and 3) it is difficult to assembly battery modules having various dimensions.

Patent Document 1 discloses wire bonder logistics facilities configured such that magazines are continuously provided to a wire bonder using a magazine transfer robot, whereby the wire bonder continuously performs work without downtime, and therefore work efficiency is improved. Specifically, a magazine transfer robot apparatus including a plurality of wire bonders, a stocker having a magazine buffer configured to store a magazine to be provided to the wire bonders, and a gripper configured to supply or discharge the magazine to the stocker or the wire bonders while gripping the magazine is disclosed.

Patent Document 2 discloses a wire bonding apparatus capable of being connected in line without necessity for a separate substrate transfer apparatus. Specifically, a material transfer unit configured to transfer a substrate between the wire bonding apparatuses and a sensor located above the material transfer unit to sense whether wire bonding has been performed with respect to a substrate introduced into the wire bonding apparatus are disclosed.

Patent Document 1 is technology in which the direction of an arrow formed at an upper part of the magazine is identified using a vision device, and when the direction of the arrow is different from a predetermined direction, the magazine is rotated 180 degrees using a motor of a rotating device in order to perform bonding, and Patent Document 2 is technology in which, after wire bonding, a substrate on which wire bonding has been completed and a substrate on which wire bonding has not been completed are distinguished from each other using a vision device.

However, a battery module assembly apparatus capable of simultaneously performing wire bonding work with respect to a plurality of battery modules, thereby improving productivity, and performing wire bonding with respect to battery modules including battery cells having different dimensions, which are recognized as important problems in the present invention, has not yet been proposed.
Korean Registered Patent Publication No. 10-1824069 ("Patent Document 1")
Korean Patent Application Publication No. 10-2007-0094259 ("Patent Document 2")
Chinese Patent Application Publication No. 11-0328461

### [Disclosure]

### [Technical Problem]

The present invention has been made in view of the above problems, and it is an object of the present invention to provide a battery module assembly apparatus with improved productivity capable of accurately scanning the positions of a module carrier and a plurality of battery cells received in the module carrier such that the battery cells are bonded to a busbar at predetermined positions and an assembly method using the same.

It is another object of the present invention to provide a battery module assembly apparatus including a plurality of bonding units, wherein bonding work by the bonding units and scanning work by a vision unit are continuously performed, whereby productivity is improved, and an assembly method using the same.

It is a further object of the present invention to provide a battery module assembly apparatus having a height adjustment portion capable of moving the module carrier upwards and downwards, whereby the battery module assembly apparatus is applicable to battery modules constituted by cylindrical battery cells having various heights, and an assembly method using the same.

### [Technical Solution]

A battery module assembly apparatus according to the present invention to accomplish the above objects is defined in the attached set of claims.

### [Advantageous Effects]

As is apparent from the above description, in a battery module assembly apparatus according to the present invention, a vision unit for precise scanning and a separate bonding vision portion for welding are used, whereby it is possible to improve bonding precision.

In addition, one vision unit and a plurality of bonding units are provided, whereby it is possible to reduce battery module production time, and therefore it is possible to improve productivity.

Also, in the battery module assembly apparatus according to the present invention, a height adjustment portion capable of moving the battery module upwards and downwards is provided, whereby it is possible to assemble battery modules including battery cells having various dimensions, and therefore it is not necessary to constitute a separate assembly apparatus depending on the dimensions of the battery cells to thus improve productivity.

### [Description of Drawings]

FIG. 1 is a schematic view showing a conventional battery cell bonding apparatus.
FIG. 2 is a plan view showing a battery module according to a first embodiment of the present invention.
FIG. 3 is a sectional view of a battery cell according to a first embodiment of the present invention.
FIG. 4 is a plan view of a battery module assembly apparatus according to a first embodiment of the present invention.
FIG. 5 is a front view of the battery module assembly apparatus according to the first embodiment of the present invention.
FIG. 6 is a perspective view of a module carrier having the battery module according to the first embodiment of the present invention received therein.
FIG. 7 is a plan view of a battery module assembly apparatus according to a second embodiment of the present invention.

### [Best Mode]

Now, preferred embodiments of the present invention will be described in detail with reference to the accompanying drawings such that the preferred embodiments of the present invention can be easily implemented by a person having ordinary skill in the art to which the present invention pertains. In describing the principle of operation of the preferred embodiments of the present invention in detail, however, a detailed description of known functions and configurations incorporated herein will be omitted when the same may obscure the subject matter of the present invention.

In addition, the same reference numbers will be used throughout the drawings to refer to parts that perform similar functions or operations. In the case in which one part is said to be connected to another part throughout the specification, not only may the one part be directly connected to the other part, but also, the one part may be indirectly connected to the other part via a further part. In addition, that a certain element is included does not mean that other elements are excluded, but means that such elements may be further included unless mentioned otherwise.

In addition, a description to embody elements through limitation or addition may be applied to all inventions, unless particularly restricted, and does not limit a specific invention.

Also, in the description of the invention and the claims of the present application, singular forms are intended to include plural forms unless mentioned otherwise.

Also, in the description of the invention and the claims of the present application, "or" includes "and" unless mentioned otherwise. Therefore, "including A or B" means three cases, namely, the case including A, the case including B, and the case including A and B.

In addition, all numeric ranges include the lowest value, the highest value, and all intermediate values therebetween unless the context clearly indicates otherwise.

Hereinafter, a battery module assembly apparatus according to the present invention and an assembly method using the same will be described with reference to the accompanying drawings.

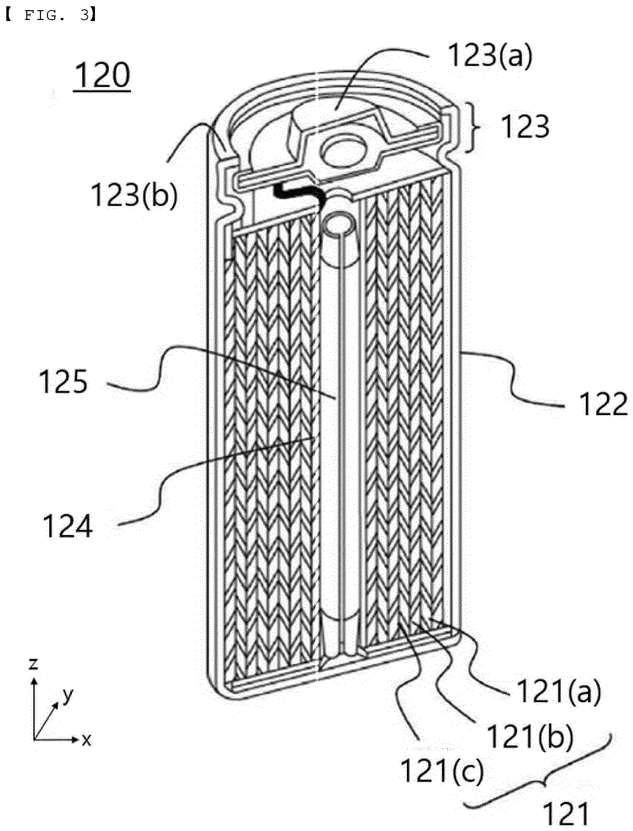

FIG. 2 is a plan view showing a battery module according to a first embodiment of the present invention, and FIG. 3 is a sectional view of a battery cell according to a first embodiment of the present invention.

Referring to FIGS. 2 and 3, the battery module 100 according to the present invention includes a module case 110, a cylindrical battery cell 120, and a busbar 130.

First, the module case 110, the external shape of which is approximately hexahedral, is provided with a receiving portion configured to receive the cylindrical battery cell 120, and a plurality of openings (not shown) is formed in an upper end of the module case such that terminals of cylindrical battery cells 120 are exposed to the outside in the state in which the cylindrical battery cells are upright.

Meanwhile, as shown in FIG. 3, the battery cell received in the battery module according to the present invention is a cylindrical battery cell 120, which may be manufactured by receiving a wound type electrode assembly 121 in a metal can 122, injecting an electrolytic solution into the metal can 122, and coupling a cap assembly 123 having an electrode terminal formed thereon to an open upper end of the metal can 122.

Here, the electrode assembly 121 is manufactured by sequentially stacking a positive electrode 121(a), a negative electrode 121(b), and a separator 121(c) and winding the same in a round shape.

A cylindrical center pin 125 is inserted into a hollow core portion 124 formed in a central region of the electrode assembly 121. In general, the center pin 125 is made of a metal material so as to have a predetermined strength. The center pin 125 serves as a path that discharges gas generated due to internal reaction during charging and discharging or during operation while fixing and supporting the electrode assembly 121.

Meanwhile, a positive electrode terminal 123 (a) is formed on a central region of an upper end of the cap assembly 123 in a protruding form, and the remaining region of the metal can 122 forms a negative electrode terminal 123(b).

Of course, the cylindrical battery cell 120 is not particularly restricted as long as the positive electrode terminal 123 (a) and the negative electrode terminal 123 (b) are exposed or protrude from the upper end of the cap assembly 123.

The busbars 130, which are configured to connect the plurality of cylindrical battery cells 120 to each other in series or in parallel, are located side by side in a state of being spaced apart from the cylindrical battery cells 120 by a predetermined distance. The busbar 130 shown in FIG. 2 has a very simple shape, and the busbar 130 is basically provided with a plurality of coupling portions capable of being coupled to the electrode terminals of the plurality of cylindrical battery cells 120 in order to connect the cylindrical battery cells 120 to each other in series or in parallel, and the coupling portions are connected for series or parallel connection. The coupling portions of the busbar 130, which are electrically connected to the cylindrical battery cells 120, are omitted from FIG. 2, and the busbar 130 may be variously deformed as needed.

In addition, although not shown in the drawings, the battery module according to the present invention may include a cover case (not shown). The cover case (not shown), which is configured to protect upper parts of the cylindrical battery cells 120 received in the module case 110, is provided with an opening portion, through which an upper surface of each of the cylindrical battery cells 120 is exposed. In addition, a plurality of protrusions having a predetermined height is formed so as to protect the cylindrical battery cells 120 from external impact from above.

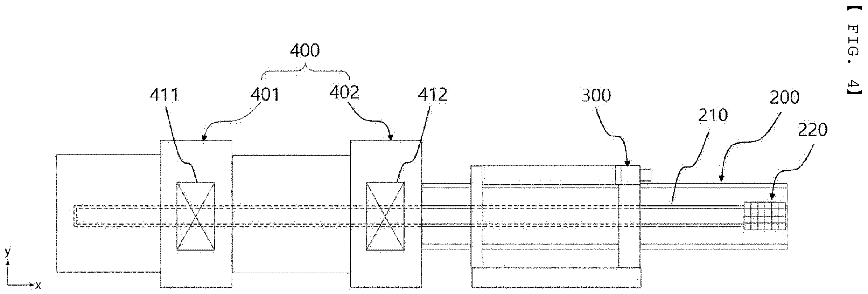

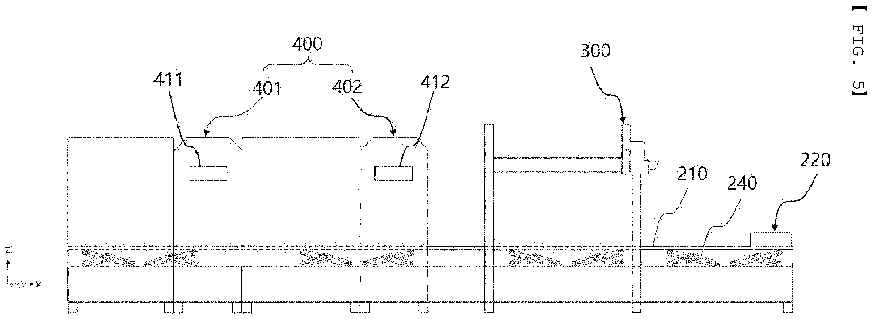

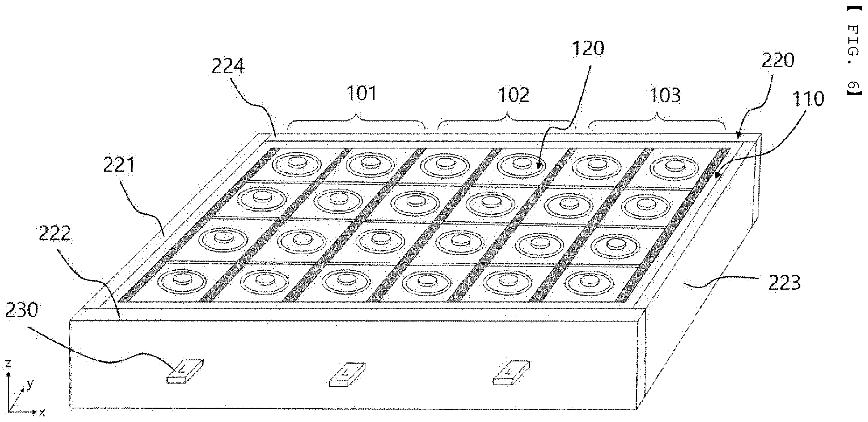

FIG. 4 is a plan view of a battery module assembly apparatus according to a first embodiment of the present invention, FIG. 5 is a front view of the battery module assembly apparatus according to the first embodiment of the present invention, and FIG. 6 is a perspective view of a module carrier having the battery module according to the first embodiment of the present invention received therein.

Referring to FIGS. 4 and 5, the battery module assembly apparatus according to the present invention may include a transfer unit 200, a vision unit 300, and a bonding unit 400. The transfer unit 200, a vision unit 300, and a bonding unit 400 may be disposed in a straight line. In this case, it is possible to minimize shaking of the battery module during transfer thereof, which is advantageous to improvement in production quality.

First, the transfer unit 200 will be described in detail.

The transfer unit 200, which is configured to transfer the battery module 100 in a process flow direction, includes a conveyor 210 configured to provide a movement path of the battery module 100 and a module carrier 220 mounted to an upper end of the conveyor 210.

The module carrier 220 may be detachably attached to the upper end of the conveyor 210, and may be formed in the shape of a rectangular parallelepiped in which a receiving portion capable of receiving the battery module 100 is formed by a vertically disposed guard. The module carrier will be described below in detail with reference to FIG. 6.

The conveyor 210 serves to transfer the battery module 100 from a front end of the battery module assembly apparatus to a discharge portion (not shown) of a bonding unit 400 located at a rear end, and is formed so as to extend over the entirety of the apparatus. In addition, the conveyor 210 may be provided separately for each zone in the vision unit 300 and the bonding unit 400, and may be independently operated in each zone. The conveyors 210 located in a state of being divided for each zone may be connected to each other in order to continuously transfer the battery module located at an upper end thereof. The conveyor 210 may be connected to a driving unit (not shown) for driving the conveyor, and the driving unit may be connected to a controller (not shown) for automatic control.

A height adjustment portion 240 may be located at a lower end of the conveyor 210, and the height adjustment portion 240 may move the conveyor 210 located at an upper end thereof upwards or downwards in a vertical direction (z-axis direction). The upward movement height of the conveyor 210 by the height adjustment portion 240 in the vertical direction may be 300 mm or less. Consequently, it is possible to adjust the height adjustment portion 240 upwards and downwards depending on the specifications of the battery cell 120 located in the battery module 100 located at the upper end of the conveyor 210, i.e., the height of the battery cell, whereby it is possible to adjust the vertical position of the battery cell 120 at the bonding unit 400, which is advantageous to efficient bonding work. The height adjustment portion 240 may be connected to a controller (not shown), and may be moved upwards or downwards by the controller.

FIG. 6 is a perspective view of the module carrier having the battery module according to the first embodiment of the present invention received therein.

Referring to FIG. 6, the module carrier 220 according to the present invention may receive the battery module 100 therein, may be movable along the conveyor 210, and may be formed in the shape of an approximately rectangular parallelepiped having an open upper end. The module carrier 220 may include a first stationary guard 221 located in a state of being vertically fixed at a front end in a movement direction of the conveyor 210, a first moving guard 223 located parallel to the first stationary guard 221 in a state of being opposite the first stationary guard, and a second stationary guard 222 and a second moving guard 224 located parallel to each other between the first stationary guard 221 and the first moving guard 223. The battery module 100 may be located in tight contact with a corner at which the first stationary guard 221 and the second stationary guard 222 are adjacent to each other in the receiving portion of the module carrier 220. In addition, the first moving guard 223 and the second moving guard 224 may move in a direction toward the battery module 100 received in the receiving portion of the module carrier 220 so as to be located in tight contact with the battery module 100 such that the battery module 100 is fixed in the module carrier 220. At this time, a fixing means may be provided to fix the first moving guard 223 and the second moving guard 224 to the first stationary guard 221 and the second stationary guard 222, respectively. In the present invention, the fixing means may be an electromagnet.

In the present invention, the first moving guard 223 and the second moving guard 224 may be horizontally and vertically displaced. In the state in which wide surfaces of the first moving guard 223 and the second moving guard 224 are located horizontally, the battery module 100 may be transferred horizontally and may then be disposed in the receiving portion (not shown) of the module carrier 220.

After the battery module 100 is located in tight contact with the corner at which the first stationary guard 221 and the second stationary guard 222 are adjacent to each other in the receiving portion of the module carrier 220, the first moving guard 223 and the second moving guard 224 may be rotated 90 degrees, whereby the wide surfaces thereof may be located vertically from a horizontal state. Subsequently, the first moving guard 223 and the second moving guard 224 may move in the direction toward the battery module 100 received in the receiving portion of the module carrier 220 so as to be located in tight contact with the battery module 100 such that the battery module 100 is fixed in the module carrier 220.

In the present invention, at least one datum portion 230 may be located at a surface of the second stationary guard 222 opposite the surface thereof that faces the receiving portion configured to receive the battery module 100, and an L-shaped marker may be located at an upper surface of the datum portion 230. This will be described below. Here, the datum portion 230 may be located in the middle between a pair of battery cell columns located parallel to the first stationary guard 221 based on the pair of battery cell columns. Also, in the present invention, the battery module 100 may be partitioned into zones based on the pair of battery cell columns located parallel to the first stationary guard 221. In FIG. 6, a first module zone 101, a second module zone 102, and a third module zone 103 are shown as being located in a direction distant from the first stationary guard 221, which, however, is merely an example in the present invention. It is obvious that the battery module is not partitioned into the above zones.

Also, in the present invention, one or more battery cell columns located parallel to the first stationary guard may be included. Specifically, even-numbered battery cell columns may be included.

The vision unit 300 will be described in detail with reference back to FIGS. 4 and 5. The vision unit 300 may scan an upper surface of the module carrier 220 that receives the battery module 100 transferred by the conveyor 210 and may transmit the scanning result to the bonding unit 500 at the rear end. Although not shown in the drawings, the vision unit 300 may include a vision camera (not shown) and an illuminator (not shown) located at a lower end of the vision camera.

The vision camera scans the position at which the module case 110 is disposed and the position of the battery cell 120 received in the module case 110 based on the L-shaped marker on the datum portion 230 of the module carrier 220. Specifically, the vision camera may scan the L-shaped marker on the datum portion 230 and the position of each of the battery cells 120 included in the battery cell columns disposed parallel to the first stationary guard 221 at opposite sides of the datum portion 230. More specifically, the vision camera may scan the L-shaped marker on the datum portion 230, the positions of a positive electrode and a negative electrode of the battery cell 120, and the relative position between the positive electrode and the negative electrode of each battery cell 120 from the L-shaped marker on the datum portion 230.

Scan information obtained by the vision unit 300 is transmitted to the bonding unit 400 at the rear end.

The bonding unit 400 electrically connects the positive electrode of the battery cell 120 to a busbar 130 and the negative electrode of the battery cell to the busbar 130. Although not shown in the drawings, a nozzle unit (not shown) having a sharp end is provided at a lower end of the bonding unit 400, and a molten conductive metal is discharged through the nozzle unit.

The bonding unit 400 is movable in leftward-rightward and forward-rearward directions, and performs wire bonding work for each module zone.

A bonding vision portion may be added to the bonding unit 400. In the bonding vision portion, a camera may be located to photograph the upper surface of the module carrier 220 that receives the battery module 100 transferred to the bonding unit 400. The photograph data is compared with the scan information of the upper surface of the module carrier 220 that receives the battery module 100 transmitted from the vision unit 300 at the front end to check a wire bonding position, and performs wire bonding.

The battery module assembly apparatus according to the first embodiment of the present invention includes one vision unit 300 and two bonding units 400, i.e., a first bonding unit 401 and a second bonding unit 402.

After the vision unit 300 scans an upper surface of a module carrier 220 that receives a first battery module 100, the module carrier 220 that receives the first battery module 100 is moved rearwards, a module carrier 220 that receives a second battery module 100 is supplied, an upper surface of the module carrier that receives the second battery module 100 is scanned, and the module carrier that receives the second battery module is moved rearwards.

The module carrier 220 that receives the first battery module 100 is transferred to the first bonding unit 401 at the rear end, scan information of the upper surface of the module carrier 220 that receives the first battery module 100 scanned by the vision unit 300 is transmitted to the first bonding unit 401. In addition, the module carrier 220 that receives the second battery module 100 is transferred to the second bonding unit 402 at the rear end, scan information of the upper surface of the module carrier 220 that receives the second battery module 100 scanned by the vision unit 300 is transmitted to the second bonding unit 402.

The first bonding unit 401 performs wire bonding work using photograph information obtained by a first camera 411 and the scan information received from the vision unit 300 with respect to the module carrier 220 that receives the first battery module 100 transferred thereto, and the second bonding unit 402 performs wire bonding work using photograph information obtained by a second camera 412 and the scan information received from the vision unit 300 with respect to the module carrier 220 that receives the second battery module 100 transferred thereto. Since bonding of the battery module 100 is continuously performed through the above work, it is possible to improve productivity of the battery module.

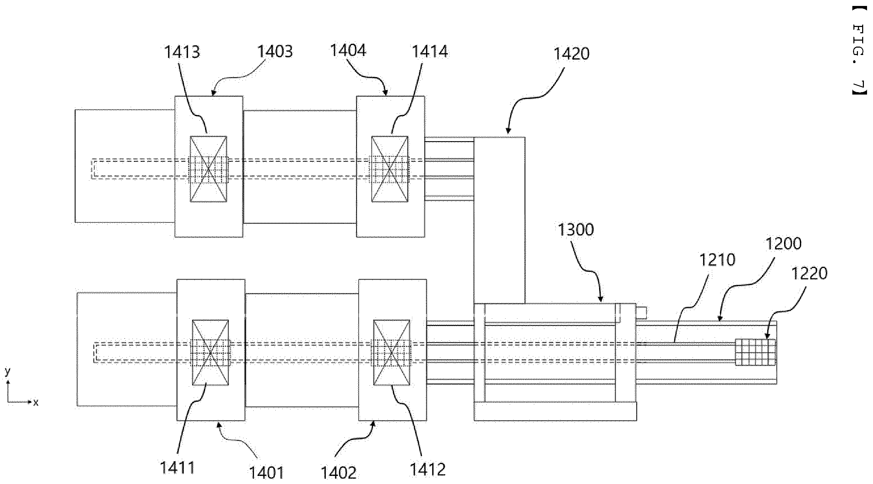

FIG. 7 is a plan view of a battery module assembly apparatus according to a second embodiment of the present invention.

The second embodiment of the present invention is identical to the first embodiment of the present invention described with reference to FIGS. 2 to 6 except that a third bonding unit 1403 and a fourth bonding unit 1404 disposed so as to correspond to a first bonding unit 1401 and a second bonding unit 1402 in parallel in a process flow direction (x-axis direction) are further provided and a parallel transfer unit 1420 configured to transfer a module carrier 1220 that receives a battery module discharged from a vision unit 1300 to the third bonding unit 1403 and the fourth bonding unit 1404 is further provided. Hereinafter, therefore, only the third bonding unit 1403, the fourth bonding unit 1404, and the parallel transfer unit 1420 will be described.

Referring to FIG. 7, the module assembly apparatus according to the second embodiment of the present invention may include a third bonding unit 1403 and a fourth bonding unit 1404 located parallel to a first bonding unit 1401 and a second bonding unit 1402, respectively.

In the same manner as the first bonding unit 1401 and the second bonding unit 1402, the third bonding unit 1403 and the fourth bonding unit 1404 check and analyze a datum portion of the module carrier, the position of a battery cell, and the relative position between a positive electrode and a negative electrode of the battery cell using scan information received from a vision unit 1300 and information obtained by a third camera 1413 and a fourth camera 1414 disposed respectively at the third bonding unit 1403 and the fourth bonding unit 1404, and then perform wire bonding.

In addition, the module carrier 1220 that receives the battery module scanned by the vision unit 1300 is transferred to a production line on which the third bonding unit 1403 and the fourth bonding unit 1404 are located by the parallel transfer unit 1420. Here, the parallel transfer unit 1420 may be located perpendicular to a transfer unit 1200 at which the first bonding unit 1401 and the second bonding unit 1402 are located, and may be configured in a conveyor structure. Between the transfer unit 1200 and the parallel transfer unit 1420 and between the parallel transfer unit 1420 and a transfer unit (not shown) at which the third bonding unit 1403 and the fourth bonding unit 1404 are located, a moving means capable of minimizing shaking of the battery module and the battery cell received in the module carrier 1220 located at the upper end thereof may be further provided.

Since the bonding units are disposed in series and in parallel, as described above, it is possible to improve overall productivity of the battery module assembly process.

An assembly method using a battery module assembly apparatus according to the present invention may include (s1) a step of seating a battery module 100 having a battery cell 120 received therein in a module carrier 220, (s2) a step of moving the module carrier using a transfer unit 200, (s3) a step of scanning a datum portion 230 and an upper end surface of the battery module 100 using a vision unit 300, and (s4) a step of connecting an electrode of the battery cell 120 received in the battery module 100 to a busbar by wire bonding.

Meanwhile, in step (s1), a step of moving a moving guard of the module carrier 220 to fix the battery module 100 to the module carrier 220 may be further performed.

Also, in step (s3), the upper end surface of the module carrier 220 that receives continuously supplied battery modules 100 may be scanned by the vision unit 300, and the battery modules may be supplied to different bonding units.

One or more battery modules, each of which is assembled using the battery module assembly method according to the present invention, may be clustered to constitute a battery pack.

Although the specific details of the present invention have been described in detail, those skilled in the art will appreciate that the detailed description thereof discloses only preferred embodiments of the present invention and thus does not limit the scope of the present invention. (Description of Reference Symbols)
10: Battery module
20: Transfer unit
21: Rail
22: Seating die
23: Guide portion
30: Vision unit
31: Vision camera
32: Vision illuminator
40: Bonding unit
100: Battery module
101: First module zone
102: Second module zone
103: Third module zone
110: Module case
120: Battery cell
121: Electrode assembly
121 (a): Positive electrode
121(b): Negative electrode
121 (c): Separator
122: Metal can
123: Cap assembly
123(a): Positive electrode terminal
124: Core portion
125: Center pin
130: Busbar
200, 1200: Transfer units
210, 1210: Conveyors
220, 1220: Module carriers
221: First stationary guard
222: Second stationary guard
223: First moving guard
224: Second moving guard
230: Datum portion
240: Height adjustment portion
300, 1300: Vision units
400: Bonding unit
401, 1401: First bonding units
402, 1402: Second bonding units
411, 1411: First cameras
412, 1412: Second cameras
1403: Third bonding unit
1404: Fourth bonding unit
1413: Third camera
1414: Fourth camera
1420: Parallel transfer unit

## Claims

1. A battery module assembly apparatus comprising:
a transfer unit (200) configured to move a battery module (100) having a cylindrical battery cell (120) received therein seated in a module carrier (220);
a vision unit (300) configured to check position information of the battery module (100) and the module carrier (220);
at least one bonding unit (400) each configured to electrically connect an electrode of the cylindrical battery cell (120) received in the battery module to a busbar (130),
wherein the battery module assembly apparatus is configured to transmit the position information checked from the vision unit (300)to the bonding unit (400);
**characterised in that**
the module carrier (220) comprises a stationary guard and a moving guard, and the moving guard is configured to move forwards and rearwards or leftwards and rightwards to fix the battery module received in the module carrier.

2. The battery module assembly apparatus according to claim 1, wherein the transfer unit (200) comprises a height adjustment portion (240) configured to move the battery module (100) and the module carrier (220) located at an upper end thereof upwards and downwards in a vertical direction.

3. The battery module assembly apparatus according to claim 1, wherein the transfer unit (200) is disposed separately for each zone and is independently operated in each zone.

4. The battery module assembly apparatus according to claim 1, wherein the transfer unit (300) is movable forwards and rearwards or leftwards and rightwards.

5. The battery module assembly apparatus according to claim 1, further comprising at least one datum portion (230) provided at an outer side of the stationary guard.

6. The battery module assembly apparatus according to claim 5, wherein the datum portion (230) has a marker for position identification located at an upper surface thereof.

7. The battery module assembly apparatus according to claim 6, wherein the vision unit (300) is configured to scan the marker for position identification, a position of the electrode of the cylindrical battery cell (120), and a position of the busbar provided at the battery module (100).

8. The battery module assembly apparatus according to claim 1, wherein the bonding unit (400)and the vision unit (300) are disposed on the transfer unit (200), the transfer unit being arranged in a straight line, the battery module assembly apparatus further comprising an additional bonding unit provided on the transfer unit and diverging from the vision unit (300).

9. The battery module assembly apparatus according to claim 1, wherein the bonding unit (400) comprises a separate bonding vision portion for position identification when electrically connecting the electrode to the busbar (130).

10. A battery module assembly method comprising:
(s1) seating a battery module (100) in a module carrier (220), the battery module (100) having a battery cell (120)received therein;
(s2) moving the module carrier (220) using a transfer unit (200);
(s3) scanning a datum portion (230) of the module carrier (220) and an upper end surface of the battery module (100) using a vision unit (300);
(s4) connecting an electrode of the battery cell (120) received in the battery module (100) to a busbar (130) by wire bonding using a bonding unit (400); and
**characterised in that**
in step (s1), moving a moving guard of the module carrier (220) to fix the battery module (100) to the module carrier (220) is further performed.

11. The battery module assembly method according to claim 10, further comprising transferring the module carrier (220) scanned by the vision unit (300) to one of a plurality of bonding units (400) between step (s3) and step (s4).

## Patentansprüche

1. Batteriemodulanordnungsvorrichtung, umfassend:
eine Transfereinheit (200), welche dazu eingerichtet ist, ein Batteriemodul (100), welches eine darin aufgenommene zylindrische Batteriezelle (120) aufweist, welches in einen Modulträger (220) gesetzt ist, zu bewegen;
eine Sichteinheit (300), welche dazu eingerichtet ist, Positionsinformationen des Batteriemoduls (100) und des Modulträgers (220) zu überprüfen;
wenigstens eine Bondeinheit (400), welche jeweils dazu eingerichtet ist, eine Elektrode der zylindrischen Batteriezelle (120), welche in dem Batteriemodul aufgenommen ist, mit einer Sammelschiene (130) elektrisch zu verbinden,
wobei die Batteriemodulanordnungsvorrichtung dazu eingerichtet ist, die Positionsinformationen, welche von der Sichteinheit (300) überprüft werden, an die Bondeinheit (400) zu übertragen;
**dadurch gekennzeichnet, dass** der Modulträger (220) einen stationären Schutz und einen sich bewegenden Schutz umfasst, und der sich bewegende Schutz dazu eingerichtet ist, sich vorwärts und rückwärts oder nach links und nach rechts zu bewegen, um das Batteriemodul, welches in dem Modulträger aufgenommen ist, zu fixieren.

2. Batteriemodulanordnungsvorrichtung nach Anspruch 1, wobei die Transfereinheit (200) einen Höhenanpassungsabschnitt (240) umfasst, welcher dazu eingerichtet ist, das Batteriemodul (100) und den Modulträger (220), welche sich an einem oberen Ende davon befinden, in einer vertikalen Richtung nach oben und nach unten zu bewegen.

3. Batteriemodulanordnungsvorrichtung nach Anspruch 1, wobei die Transfereinheit (200) für jede Zone separat angeordnet ist und in jeder Zone unabhängig betrieben wird.

4. Batteriemodulanordnungsvorrichtung nach Anspruch 1, wobei die Transfereinheit (300) vorwärts und rückwärts oder nach links und nach rechts beweglich ist.

5. Batteriemodulanordnungsvorrichtung nach Anspruch 1, ferner umfassend wenigsten einen Bezugsabschnitt (230), welcher an einer äußeren Seite des stationären Schutzes bereitgestellt ist.

6. Batteriemodulanordnungsvorrichtung nach Anspruch 5, wobei der Bezugsabschnitt (230) einen Marker zur Positionsidentifikation aufweist, welcher sich an einer oberen Fläche davon befindet.

7. Batteriemodulanordnungsvorrichtung nach Anspruch 6, wobei die Sichteinheit (300) dazu eingerichtet ist, den Marker zur Positionsidentifikation, eine Position der Elektrode der zylindrischen Batteriezelle (120) und eine Position der Sammelschiene, welche an dem Batteriemodul (100) bereitgestellt ist, zu scannen.

8. Batteriemodulanordnungsvorrichtung nach Anspruch 1, wobei die Bondeinheit (400) und die Sichteinheit (300) an der Transfereinheit (200) angeordnet sind, wobei die Transfereinheit in einer geraden Linie angeordnet ist, wobei die Batteriemodulanordnungsvorrichtung ferner eine zusätzliche Bondeinheit umfasst, welche an der Transfereinheit bereitgestellt ist und von der Sichteinheit (300) divergiert.

9. Batteriemodulanordnungsvorrichtung nach Anspruch 1, wobei die Bondeinheit (400) einen separaten Bondsichtabschnitt zur Positionsidentifikation, wenn die Elektrode mit der Sammelschiene (130) elektrisch verbunden ist, umfasst.

10. Batteriemodulanordnungsverfahren, umfassend:
(s1) Setzen eines Batteriemoduls (100) in einen Modulträger (220), wobei das Batteriemodul (100) eine Batteriezelle (120) aufweist, welche darin aufgenommen ist;
(s2) Bewegen des Modulträgers (220) unter Verwendung einer Transfereinheit (200);
(s3) Scannen eines Bezugsabschnitts (230) des Modulträgers (220) und einer oberen Endfläche des Batteriemoduls (100) unter Verwendung einer Sichteinheit (300);
(s4) Verbinden einer Elektrode der Batteriezelle (120), welche in dem Batteriemodul (100) aufgenommen ist, mit einer Sammelschiene (130) durch Drahtbonden unter Verwendung einer Bondeinheit (400); und
**dadurch gekennzeichnet, dass** in Schritt (s1) ferner ein Bewegen eines Bewegungsschutzes des Modulträgers (220) durchgeführt wird, um das Batteriemodul (100) an dem Modulträger (220) zu fixieren.

11. Batteriemodulanordnungsverfahren nach Anspruch 10, ferner umfassend Transferieren des Modulträgers (220), welcher durch die Sichteinheit (300) gescannt wird, an eine Mehrzahl von Bondeinheiten (400) zwischen Schitt (s3) und (s4).

## Revendications

1. Appareil d'assemblage de module de batterie comprenant :
une unité de transfert (200) configurée pour déplacer un module de batterie (100) ayant une cellule de batterie cylindrique (120) reçue dans celui-ci positionnée dans un support de module (220) ;
une unité de vision (300) configurée pour vérifier des informations de position du module de batterie (100) et du support de module (220) ;
au moins une unité de liaison (400) configurée chacune pour connecter électriquement une électrode de la cellule de batterie cylindrique (120) reçue dans le module de batterie à une barre omnibus (130),
dans lequel l'appareil d'assemblage de module de batterie est configuré pour transmettre les informations de position vérifiées de l'unité de vision (300) à l'unité de liaison (400) ;
**caractérisé en ce que** le support de module (220) comprend un protecteur fixe et un protecteur mobile, et le protecteur mobile est configuré pour se déplacer vers l'avant et vers l'arrière ou vers la gauche et vers la droite pour fixer le module de batterie reçu dans le support de module.

2. Appareil d'assemblage de module de batterie selon la revendication 1, dans lequel l'unité de transfert (200) comprend une partie de réglage en hauteur (240) configurée pour déplacer le module de batterie (100) et le support de module (220) situés à une extrémité supérieure de celle-ci vers le haut et vers le bas dans une direction verticale.

3. Appareil d'assemblage de module de batterie selon la revendication 1, dans lequel l'unité de transfert (200) est disposée séparément pour chaque zone et est actionnée indépendamment dans chaque zone.

4. Appareil d'assemblage de module de batterie selon la revendication 1, dans lequel l'unité de transfert (300) est mobile vers l'avant et vers l'arrière ou vers la gauche et vers la droite.

5. Appareil d'assemblage de module de batterie selon la revendication 1, comprenant en outre au moins une partie de référence (230) prévue sur un côté extérieur du protecteur fixe.

6. Appareil d'assemblage de module de batterie selon la revendication 5, dans lequel la partie de référence (230) présente un repère d'identification de position situé au niveau d'une surface supérieure de celle-ci.

7. Appareil d'assemblage de module de batterie selon la revendication 6, dans lequel l'unité de vision (300) est configurée pour balayer le repère d'identification de position, une position de l'électrode de la cellule de batterie cylindrique (120) et une position de la barre omnibus prévue au niveau du module de batterie (100).

8. Appareil d'assemblage de module de batterie selon la revendication 1, dans lequel l'unité de liaison (400) et l'unité de vision (300) sont disposées sur l'unité de transfert (200), l'unité de transfert étant agencée en ligne droite, l'appareil d'assemblage de module de batterie comprenant en outre une unité de liaison supplémentaire prévue sur l'unité de transfert et s'écartant de l'unité de vision (300).

9. Appareil d'assemblage de module de batterie selon la revendication 1, dans lequel l'unité de liaison (400) comprend une partie de vision de liaison séparée pour l'identification de position lors de la connexion électrique de l'électrode à la barre omnibus (130).

10. Procédé d'assemblage de module de batterie comprenant :
(s1) le positionnement d'un module de batterie (100) dans un support de module (220), le module de batterie (100) ayant une cellule de batterie (120) reçue dans celui-ci ;
(s2) le déplacement du support de module (220) à l'aide d'une unité de transfert (200) ;
(s3) le balayage d'une partie de référence (230) du support de module (220) et d'une surface d'extrémité supérieure du module de batterie (100) à l'aide d'une unité de vision (300) ;
(s4) la connexion d'une électrode de la cellule de batterie (120) reçue dans le module de batterie (100) à une barre omnibus (130) par liaison filaire à l'aide d'une unité de liaison (400) ; et
**caractérisé en ce qu'**à l'étape (s1), le déplacement d'un protecteur mobile du support de module (220) destiné à fixer le module de batterie (100) au support de module (220) est en outre réalisé.

11. Procédé d'assemblage de module de batterie selon la revendication 10, comprenant en outre le transfert du support de module (220) balayé par l'unité de vision (300) vers l'une d'une pluralité d'unités de liaison (400) entre l'étape (s3) et l'étape (s4).
